(19) Europäisches Patentamt
European Patent Office
Office européen des brevets

(11) **EP 2 448 237 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(51) Int Cl.:
*H04N 1/04* *(2006.01)*     *G03B 42/08* *(2006.01)*
*H04N 1/409* *(2006.01)*

(21) Anmeldenummer: **11176676.2**

(22) Anmeldetag: **05.08.2011**

(54) **Verfahren und Vorrichtung zum Auslesen von in einem Speicherleuchtstoff eines Speichermediums gespeicherten Bildinformationen**

Device and method for reading out image information stored in a luminescent material of a storage medium

Procédé et dispositif destinés à la lecture de données images stockées sur une matière fluorescente de mémoire d'un support de stockage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2010 DE 102010039733**
            **23.12.2010 DE 102010064136**

(43) Veröffentlichungstag der Anmeldung:
**02.05.2012 Patentblatt 2012/18**

(73) Patentinhaber: **Thoms, Michael**
**91054 Erlangen (DE)**

(72) Erfinder: **Thoms, Michael**
**91054 Erlangen (DE)**

(74) Vertreter: **Meissner Bolte Partnerschaft mbB**
**Bankgasse 3**
**90402 Nürnberg (DE)**

(56) Entgegenhaltungen:
**US-A1- 2002 040 973**     **US-A1- 2003 057 386**
**US-B1- 6 580 525**

## Beschreibung

Die Erfindung betrifft ein Verfahren und eine Vorrichtung zum Auslesen von in einem Speicherleuchtstoff eines Speichermediums gespeicherten Bildinformationen.

In der Computerradiographie bedient man sich zum Auslesen von eine Vielzahl von Bildinformationen enthaltenden latenten Röntgenbildern, die zuvor in einem Speicherleuchtstoff eines Speichermediums beispielsweise einer Speicherfolie gespeichert wurden, einer Abtastung der in der Speicherfolie gespeicherten Bildinformationen mit einem Laser. Dabei wird ein möglichst fein fokussierter Laserstrahl nacheinander Zeile für Zeile über das Speichermedium, also die Speicherfolie bewegt, bis die gesamte Speicherfolienfläche abgetastet wurde. Die gespeicherte Bildinformation liegt in Form von Photoelektronen enthaltenden Speicherzentren vor, die unter der Wirkung des Laserlichts photostimuliert werden, um anschließend zu rekombinieren und einen Teil der gespeicherten Energie in Form von Lumineszenzsignalen abzugeben. Dabei erfolgt die Lumineszenzabgabe mit einer zeitlichen exponentiellen Abklingkurve. Die Abklingzeitkonstante $\tau$ für den kommerziell angewendeten Speicherleuchtstoff BaFBr: EU$^{2+}$ beträgt zirka 750ns(siehe H. von Seggern, Brazilian Journal of Physics, vol. 29, no. 2, June 1999, 254).

Derartige Abtastverfahren sind in den Patentschriften US 4,692,813 , US 6,580,525, EP 077 677 B1, EP 05 99 128 A2 und in J. Miyahara et al., Nuclear Instruments and Methods in Physics Research A246 (1986), S.572-578 beschrieben.

Die durch Photostimulation ausgelösten Lumineszenzsignale werden über einen Lichtkoppler einem Photodetektor, der als Photomultiplier ausgeführt ist, zugeführt. Der Photodetektor wandelt das Lumineszenzsignal in ein analoges elektrisches Signal um. Dieses elektrische Signal wird einem nachfolgendem Verstärker zugeführt. Das Ausgangssignal des Verstärkers wird in bestimmten Zeitabständen von einem Sample-and-Hold-Verstärker erfasst und die dadurch erhaltenen Messwerte werden mittels eines Analog-Digitalwandlers in digitale Messwerte umgewandelt. Jeder dieser digitalen Messwerte stellt einen aus dem Lumineszenzsignal auf oben beschriebene Art und Weise ermittelten Ausgangswert dar, aus dem jeweils ein Pixelwert eines Bildpixels bzw. Bildpunktes eines digitalen Bildes bestimmt wird. Jeder einzelne Ausgangswert wird im Ortsraum der Speicherfolie der Röntgendosis eines Bildpixels eines digitalen Bildes, dessen Position der Position des Laserstrahls zum Zeitpunkt der Erfassung des elektrischen Signals entspricht, zugeordnet.

Auf Grund der Abklingzeitkonstante von ca. 750ns muss, um eine Überlagerung zweier aufeinander folgender benachbarten Bildpunkten zugeordneter Ausgangswerte zu vermeiden, der Zeitabstand zwischen dem in ersten Zeitintervallen aufeinanderfolgenden Ermitteln des Ausgangswertes, also Erfassen des Lumineszenz- bzw. des diesem entsprechenden elektrischen Signals bei mindestens dem zwei- bis dreifachen der Abklingzeitkonstante liegen. Dadurch liegt das erste Zeitintervall deutlich oberhalb einer Mikrosekunde. Würde man diese Grenze nicht beachten und das erste Zeitintervall reduzieren, käme es zu einer Überlagerung aufeinanderfolgender Bildpunktsignale und zu einer Verschmierung der Bildinformationen in der Abtastrichtung des Laserstrahls. Somit würde sich die Bildqualität des digitalen Bildes hinsichtlich der erreichten Auflösung verschlechtern.

Es besteht die Möglichkeit den Intensitätsbereich der vom Analog-Digitalwandler gewandelten Lumineszenzsignale und den damit verbundenen Röntgenbelichtungen zu vergrößern, indem die Verstärkung des Verstärkers veränderbar ist oder es sich um einen Verstärker mit logarithmischer Kennlinie handelt (EP 182 099 A1).

Gemäß dem Stand der Technik wird die Speicherfolie nach oder während des Abtastvorgangs einer Zeile senkrecht zu dieser Abtastrichtung (schnelle Abtastrichtung) versetzt und anschließend die nächste Zeile abgetastet. Der Zeilenabstand wird dabei so gewählt, dass die Abtastpunkte ein quadratisches Pixelraster bilden (siehe dazu AAPM-Report No. 93, October 2006 von der American Association of Physicists in Medicine).

Bei all den aus dem Stand der Technik genannten Ausleseverfahren wird jedoch die Wiedergabe der gespeicherten Bildinformationen durch ein Rauschen verschlechtert.

Es ist nun Aufgabe der Erfindung ein kostengünstiges Verfahren und eine Vorrichtung zum Auslesen von in einem Speicherleuchtstoff eines Speichermediums gespeicherten Bildinformationen anzugeben, welches ein höheres Signal-Rauschverhältnis des Ausgangswerts, also des digitalisierten Lumineszenzsignals ermöglicht.

Hinsichtlich des Verfahrens wird diese Aufgabe gelöst durch ein Verfahren zum Auslesen von in einem Speicherleuchtstoff eines Speichermediums gespeicherten Bildinformationen gemäß Patentanspruch 1. Demnach umfasst das Verfahren die folgenden Schritte:

a) ein Lichtstrahl wird über das Speichermedium bewegt, um durch Photostimulation des Speicherleuchtstoffes ein Lumineszenzsignal zu erzeugen,

b) aus dem Lumineszenzsignal wird in ersten Zeitintervallen jeweils ein Ausgangswert ermittelt, aus dem jeweils ein Pixelwert eines Bildpixels eines digitalen Bildes bestimmt wird,

c) der Ausgangswert wird durch Addition einer Mehrzahl von Messwerten des Lumineszenzsignals ermittelt, die in innerhalb des ersten Zeitintervalls liegenden zweiten Zeitintervallen erfasst werden.

Mit anderen Worten: Es werden jeweils eine festgelegte Anzahl an aufeinanderfolgenden Messwerten blockweise aufsummiert. Die Anzahl multipliziert mit der Dauer des Zeitabstandes zwischen den einzelnen Erfassungen der Messwerte, also der Dauer des zweiten Zeitintervalls, entspricht der Dauer des ersten Zeitintervalls.

Die Erfindung beruht auf folgender Erkenntnis:

Bei der Verwendung von den bekannten Ausleseverfahren werden die jeweils durch Absorption von Röntgenquanten in dem Speichermedium gebildeten Bildinformationen beim Auslesen mit einem unterschiedlichem Gewicht erfasst. Dieses Gewicht hängt von dem zeitlichen Abstand von der Erzeugung des Lumineszenzsignals bis zu dessen Registrierungszeitpunkt durch den Photodetektor ab. Streicht ein ideal fokussierter Laserstrahl mit konstanter Geschwindigkeit über die Abtastzeile, werden zu den unterschiedlichen Zeitpunkten unterschiedliche Speicherzentren durch Absorption des Laserstrahls zur Rekombination angeregt. Zeitlich werden in Folge von dem Speicherleuchtstoff ein Lumineszenzsignal bildende Lichtquanten emittiert, deren Intensitätskurven exponentiell mit einer Zeitkonstante $\tau$ abklingen. Dieses Abklingverhalten spiegelt sich dann auch im entsprechenden analogen elektrischen Signal des Photodetektors wider. Da es sich um Quantenvorgänge bei der Emission der Lichtquanten handelt, sind die Kurven von einem Quantenrauschen überlagert, das umso höher ist, je weniger Quanten an dem Ausleseprozess beteiligt sind und somit in die Messungen eingehen können.

Durch eine Erhöhung der Anzahl der Erfassungen des Lumineszenzsignals in einem gegebenen ersten Zeitintervall, wird die Anzahl der an dem Ausleseprozess beteiligten Quanten erhöht und somit das Rauschen reduziert. Durch die Addition der Mehrzahl von Messwerten wird dann weiterhin ein erstes Zeitintervall betrachtet, das von der Größenordnung her dem ersten Zeitintervall gemäß dem Stand der Technik enzspricht, also typischerweise etwa dem zwei- bis dreifachen der Abklingzeitkonstante entspricht, so dass eine Überlagerung zweier aufeinanderfolgender einem Bildpixel zugeordneten Ausgangswerte vermieden wird.

Bei einer bevorzugten Ausführung der Erfindung sind die Zeitabstände in denen die Messwerte erfasst werden und somit das zweite Zeitintervall kleiner als die Dauer der dreifachen Abklingzeitkonstante, vorzugsweise kleiner als die Abklingzeitkonstante des Speicherleuchtstoffes.

Vorzugsweise werden Messwerte des Lumineszenzsignals erfasst, indem:

- das Lumineszenzsignal mittels eines Photodetektors registriert und in ein analoges elektrisches Signal umgewandelt wird,
- das elektrische Signal in zweiten Zeitintervallen $\Delta t_{II}$ von einer Abtasteinrichtung erfasst wird,
- die dadurch erhaltenen analogen Messwerte mittels eines A/D-Wandlers in digitale Messwerte umgewandelt werden, aus denen der Ausgangswert ermittelt wird.

Die einzelnen digitalen Messwerte können vor deren Addition in einem Speicher zwischengespeichert werden.

Bei einer weiteren bevorzugten Ausführungsform wird das Ausgangssignal durch einen Faktor dividiert, so dass dieses auf einen maximalen Wert begrenzt wird. Hierdurch wird eine kostengünstige digitale Verarbeitung ermöglicht, da nur mit einer maximalen Digitalisierungstiefe gearbeitet wird.

Bei einer weiteren bevorzugten Ausführungsform wird das elektrische Signal vor dem Erfassen gefiltert. Dies geschieht durch ein Tiefpassfilter, insbesondere durch ein Tiefpassfilter erster Ordnung oder ein Tiefpassfilter mit einer gaußförmigen Impulsantwort. Dadurch wird erreicht, dass das durch die Abtasteinrichtung erfasste analoge elektrische Signal zuvor über einen noch längeren zeitlichen Bereich gemittelt wird, um noch mehr Photoelektronen vom Photomultiplier erfassen zu können und somit ein Rauschen zu reduzieren.

Weiterhin kann das elektrische Signal vor dem Erfassen gemittelt werden. Dadurch wird erreicht, dass jedes Signal gleichermaßen erfasst wird und die Varianz im Erfassungsgrad über alle Pixel mit dem zeitlichen Auftreten des Signals verschwindet.

Bei einer weiteren bevorzugten Ausführungsform werden Bereiche des Speicherleuchtstoffes sowohl in Zeilenrichtung als auch in einer dazu senkrecht stehenden Richtung photostimuliert und ein Erfassen der Messwerte im Ortsraum in der Zeilenrichtung in einem geringeren Abstand durchgeführt als senkrecht zur Zeilenrichtung.

Hinsichtlich der Vorrichtung wird die Aufgabe gelöst mittels einer Vorrichtung zum Auslesen von in einem Speicherleuchtstoff eines Speichermediums gespeicherten Bildinformationen gemäß Patentanspruch 10. Vorteilhafte Ausführungen sind in den Unteransprüchen angegeben. Die Vorteile wurden bereits mit dem erfindungsgemäßen Verfahren erläutert.

Zur weiteren Erläuterung der Erfindung wird auf die Ausführungsbeispiele der Zeichnung verwiesen. Es zeigen:

Fig. 1 ein Diagramm, in dem das Abklingverhalten eines Lumineszenzsignals S aufgezeigt ist,

Fig. 2 ein Diagramm, in dem die Änderung des Faktors $\gamma$ gegenüber der Dauer eines ersten Zeitintervalls $\Delta t_I$ aufgetragen ist,

Fig. 3 ein Prinzipbild einer ersten Ausführungsform der erfindungsgemäßen Vorrichtung,

Fig. 3a ein Diagramm, in dem ein Lumineszenzsignal S im zeitlichen Verlauf dargestellt ist,

Fig. 4 ein Diagramm, in dem die Änderung des Faktors $\gamma$ über der Anzahl der addierten digitalen Messwerte aufgetragen ist,

Fig. 5 ein weiteres Diagramm, in dem der Faktor $\gamma$ über der Anzahl der addierten digitalen Messwerte aufgetragen ist,

Fig. 6 ein Diagramm in dem die Anzahl von detektierten Photoelektronen in Abhängigkeit von der Dauer des ersten Zeitintervalls $\Delta t_I$ aufgetragen ist,

Fig. 7 ein Diagramm, in dem die Abhängigkeit des Faktors $\alpha$ von der Dauer des ersten Zeitintervalls $\Delta t_I$ aufgetragen ist,

Fig. 8 ein Diagramm, in dem der Faktor $\alpha$ in Abhängigkeit von der Anzahl der addierten digitalen Messwerte dargestellt ist,

Fig. 9 ein Diagramm, in dem die Abhängigkeit des Faktors $\alpha\gamma$ gegenüber der Anzahl der addierten digitalen Messwerte aufgetragen ist,

Fig. 10 ein Diagramm, in dem die Zunahme des Signal-Rauschverhältnisses bei Anwendung des erfindungsgemäßen Verfahrens gegenüber der Anzahl der addierten digitalen Messwerte dargestellt ist,

Fig. 11 eine Vorrichtung mit einem Filter,

Fig. 12 eine Vorrichtung, bei der dem Photodetektor Mittelwertbildner nachgeschaltet sind.

Wie bereits oben ausgeführt, werden bei der Verwendung von Detektionsverfahren gemäß dem Stand der Technik die durch die Absorption von Röntgenquanten in dem Speichermedium enthaltenen Bildinformationen mit unterschiedlichem Gewicht detektiert. Dieses Gewicht hängt von dem zeitlichen Abstand des Erzeugens des Lumineszenzsignals durch den Lichtstrahl bis zu dessen Erfassen ab.

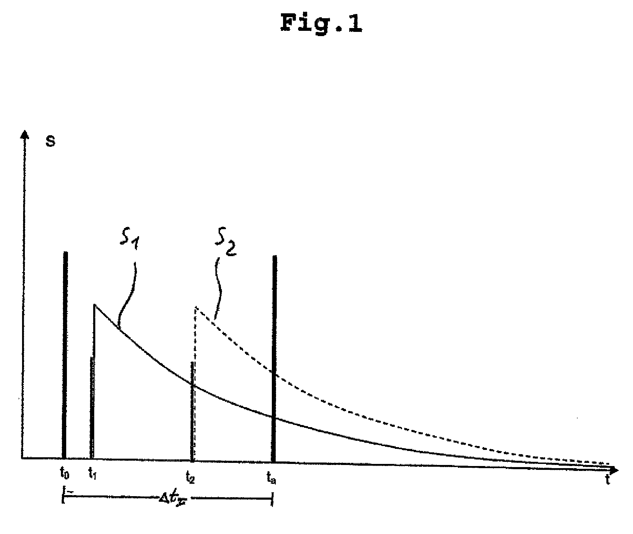

In Fig.1 sind die von einem Photodetektor in jeweils ein elektrisches Signal umgewandelten zeitabhängigen photostimulierten Lumineszenzsignale $S_1$ und $S_2$ zweier absorbierter Röntgenquanten im Zeitverlauf schematisch dargestellt.

Streicht ein ideal fokussierter Laserstrahl mit konstanter Geschwindigkeit über die Abtastzeile des Speicherleuchtstoffs, werden jeweils zu den Zeitpunkten $t_1$ und $t_2$ die durch Absorption der Röntgenquanten erzeugten Speicher- bzw. Lumineszenzzentren zur Rekombination angeregt. Zeitlich werden in Folge von dem Speicherleuchtstoff Lumineszenzsignale $S_1$, $S_2$ emittiert, deren Intensitätskurven exponentiell mit der Zeitkonstante $\tau$ abklingen. Ebenso klingt das umgewandelte analoge elektrische Signal des als Photomultipliers ausgeführten Photodetektors exponentiell mit der Zeit ab.

Da es sich um Quantenvorgänge bei der Emission der Lumineszenzsignale handelt, sind die Kurven von einem Quantenrauschen überlagert, das umso höher ist, je weniger Quanten an dem jeweiligen Prozess beteiligt sind. Das zu einem Erfassungszeitpunkt $t_a$ erfasste Lumineszenzsignal $S = S_1(t_a) + S_2(t_a)$, hängt in seiner Höhe daher für die beiden Röntgenquanten von den Zeitabständen $(t_a-t_1)$ bzw. $(t_a-t_2)$ zwischen der jeweiligen Erzeugung und der Erfassung durch die Abtasteinrichtung. Da die zeitliche Position innerhalb eines Pixels nicht mehr unterschieden wird, resultiert dadurch ein zusätzliches Rauschen in der Signalhöhe und damit im detektierten Lumineszenzsignal, das sich im umgewandelten elektrischen Signal fortpflanzt.

Nimmt man an, dass das von den Lumineszenzzentren eines einzigen absorbierten Röntgenquants bei Photostimulation emittierte Lumineszenzsignal S in der Form

$$S(t) = S_0 e^{-t/\tau} \tag{1}$$

abklingt, dann ergibt sich die mittlere Signalhöhe durch Mittelwertbildung der zum Zeitpunkt $t_a$ erfassten Signalhöhe über das erste Zeitintervall $\Delta t_I$, welches im Ausführungsbeispiel in Fig. 1 von einem Zeitpunkt $t_0$ bis zum Zeitpunkt $t_a$ dauert:

$$\overline{S} = \frac{1}{\Delta t_I} \int_0^{\Delta t_a} S_0 e^{-t/\tau} dt \tag{2}$$

Die Standardabweichung $\sigma_s$ und damit das Rauschen im Signalwert durch die relativ zum Abtastzeitpunkt undefinierte Position ergibt sich über die Beziehung:

$$\sigma_S = \sqrt{\frac{1}{\Delta t_I} \int\limits_0^{\Delta t_I} \left(S(t) - \overline{S}\right)^2 dt} \qquad (3)$$

Das Verhältnis von Signal und Rauschen bleibt auch für folgende Erfassungszeitpunkte gleich. Insbesondere ist auch das Signal-Rausch-Verhältnis für das über aufeinanderfolgende Bildpunkte aufsummierte Signal eines Röntgenquants gleich.

Bislang wurde das Rauschen betrachtet, wenn genau ein Röntgenquant, das heißt, die Lumineszenzzentren eines einzigen Röntgenquants, innerhalb eines Bildpunktes photostimuliert wurden. Jedoch handelt es sich bei der Absorption der Röntgenquanten um einen statistischen Prozess, welcher der Poisson-Statistik unterliegt. D.h. werden bei im Mittel gleich bleibender Röntgendosis im Mittel dn Röntgenquanten pro Zeitintervall dt abgetastet, schwankt deren Anzahl um die Quadratwurzel aus dn. Diese Anzahl der Röntgenquanten pro Zeitintervall dn/dt entspricht der effektiven mit einem idealen Abtastverfahren nachweisbaren Anzahl $N_{eff}$ der Röntgenquanten in einem ersten Zeitintervall der Dauer $\Delta t_I$. Also gilt dn/dt = $N_{eff}/\Delta t_I$. Das detektierte Gesamtsignal ergibt sich daher durch Aufintegration der Teilsignale über die Zeit $t$, über die ein Pixel abgetastet wird zu:

$$S_{ges} = \int S(t)dn = \int\limits_0^{\Delta t_I} S(t)\frac{dn}{dt}dt = \frac{N_{eff}}{\Delta t_I}\int\limits_0^{\Delta t_I} S(t)dt = N_{eff}\overline{S} \qquad (4).$$

Die gesamte Varianz $\sigma_{ges}^2$ in der Signalhöhe ergibt sich, wenn man die Varianzen der Einzelsignale $\sigma^2 = S(t)^2 dn$ aufsummiert zu:

$$\sigma_{ges}^2 = \int S(t)^2 dn = \int\limits_0^{\Delta t_I} S(t)^2 \frac{dn}{dt}dt = \frac{N_{eff}}{\Delta t_a}\int\limits_0^{\Delta t_I} S(t)^2 dt = N_{eff}\overline{S}^2 + \frac{N_{eff}}{\Delta t_a}\int\limits_0^{\Delta t_I} \left(S(t) - \overline{S}\right)^2 dt \qquad (5).$$

$$= N_{eff}\overline{S}^2 + N_{eff}\sigma_S^2$$

Das gesamte Signal/Rausch-Verhältnis wird damit zu:

$$\left(S/\sigma\right)_{ges} = \sqrt{\frac{N_{eff}}{1 + \sigma_S^2/\overline{S}^2}} \qquad (6)$$

Das gesamte Signal/Rausch-Verhältnis wird somit gegenüber dem idealerweise erreichbaren Signal/Rausch-Verhältnis, welches der Wurzel der effektiv zu detektierenden Quantenanzahl entspricht, um den Faktor

$$\gamma = \sqrt{1 + \sigma_S^2/\overline{S}^2} \qquad (7)$$

vermindert. Weiterhin sei darauf hingewiesen, dass die Anzahl der tatsächlich effektiv detektierbaren Röntgenquanten $N_{eff}$ in einem Pixel sich von der tatsächlich absorbierten Anzahl der Röntgenquanten in dem Pixel $N_x$ sich um einen Faktor unterscheidet, der in den verschiedenen Umwandlungsstufen der Quantensignale in dem Detektionsprozess begründet ist.

Bei der obigen Ableitung wurde der Fall eines ideal fokussierten Laserstrahls angenommen. In realen Detektoren sind die Laserstrahlen jedoch nicht ideal fokussiert und bilden in den Speicherfolien auch durch Lichtstreuung einen Lichthof bestimmter Größe. Dies führt dazu, dass das über die Lumineszenzzentren gebildete Lumineszenzsignal (S) eines Röntgenquants über einen endlichen Zeitraum angeregt wird und somit die Zeitkurve des emittierten Signals sich bei vernachlässigter Informationslöschung durch die Faltung der Anregungszeitfunktion mit S(t) ergibt. Dadurch steigt insgesamt die Verschmierung der Bildpunktsignale, wodurch die Bildauflösung schlechter wird. Gleichzeitig nimmt aber der Faktor $\gamma$ ab, da $\sigma_s$ reduziert wird.

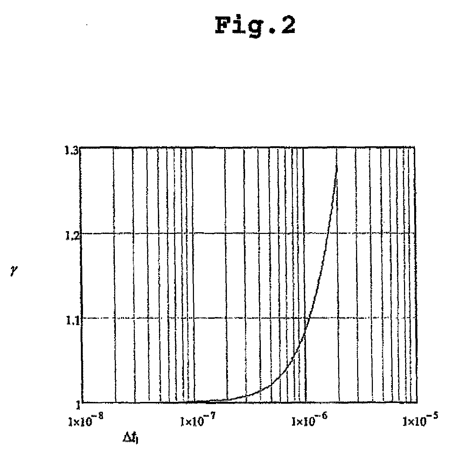

In Fig.2 ist die Änderung des Faktors $\gamma$ mit dem ersten Zeitintervall $\Delta t_I$ für eine Zeitkonstante des Speicherleuchtstoffes von $\tau$=680ns für einen ideal punktförmigen Laserstrahl dargestellt. Es ist deutlich zu erkennen, dass der

Faktor $\gamma$ mit zunehmender Länge des ersten Zeitintervalls $\Delta t_I$ zunimmt, was gleichzeitig eine Verringerung des Signal/Rausch-Verhältnisses bedeutet.

Um diesen Verlust an Signal/Rausch-Verhältnis zu kompensieren, müsste *Neff* um einen Faktor, der ebenso groß wie $\gamma$ ist, erhöht werden. Allerdings ist dies in der humanmedizinischen Anwendung nicht ohne weiteres möglich, da die Röntgendosis möglichst gering gehalten werden sollte. Weiterhin besteht - und dies gilt auch für technische Anwendungen - oftmals das Problem, dass die Röntgendosiserhöhung mit einer Erhöhung der Belichtungszeit und damit Erhöhung der Kosten des ComputerRadiographischen-Verfahrens einhergeht.

Um das Ziel der vorliegenden Erfindung zu verfolgen, nämlich ein höheres Signal/Rausch-Verhältnis des digitalisierten Lumineszenzsignals S und damit des Röntgenbildes bei ebenso geringer Überlagerung der Lumineszenzsignale aufeinander folgender Bildpixel zu erhalten, ist es daher erforderlich, obigen Faktor $\gamma$ nahe eins werden zu lassen.

Um das Signal-Rausch-Verhältnis zu verbessern, gibt es einen erfinderischen Grundgedanken, der dem Ziel dient $\sigma_s$ zu minimieren, und verschiedene technische Realisierungsformen hat. Dem erfinderischen Grundgedanken liegt die Erkenntnis zugrunde, dass einerseits der zeitliche Abstand der Zeitpunkte, an denen das Lumineszenzsignal S erfasst wird, also der digitale Messwert ermittelt wird, ausreichend groß sein muss, damit keine Überlagerung von Lumineszenzsignalen S erfolgt, die aufeinanderfolgenden Bildpixeln zugeordnet sind und andererseits idealerweise immer der gleiche digitale Wert für gleichartige Lumineszenzzentren unabhängig von der zeitlichen Lage der Lumineszenzzentren im ersten Zeitintervall $\Delta t_I$ erfasst werden.

Dabei wird außerdem das Ziel verfolgt, den apparativen Aufwand für das Abtastverfahren und damit die Kosten gering zu halten.

Zur Lösung dieser Aufgabe ist weiterhin die Beobachtung, dass die Abklingkurve des Lumineszenzsignals S bei ausreichend großem Intervall für die Digitalisierung und Übergabe der digitalen Werte an eine sie weiterverarbeitende Steuerung mit ihrer nahezu gesamten Intensität in das erste Zeitintervall $\Delta t_I$ fällt. Lediglich ein vernachlässigbarer kleiner Rest fällt in ein auf dieses erste Zeitintervall $\Delta t_I$ nachfolgendes erstes Zeitintervall $\Delta t_I$.

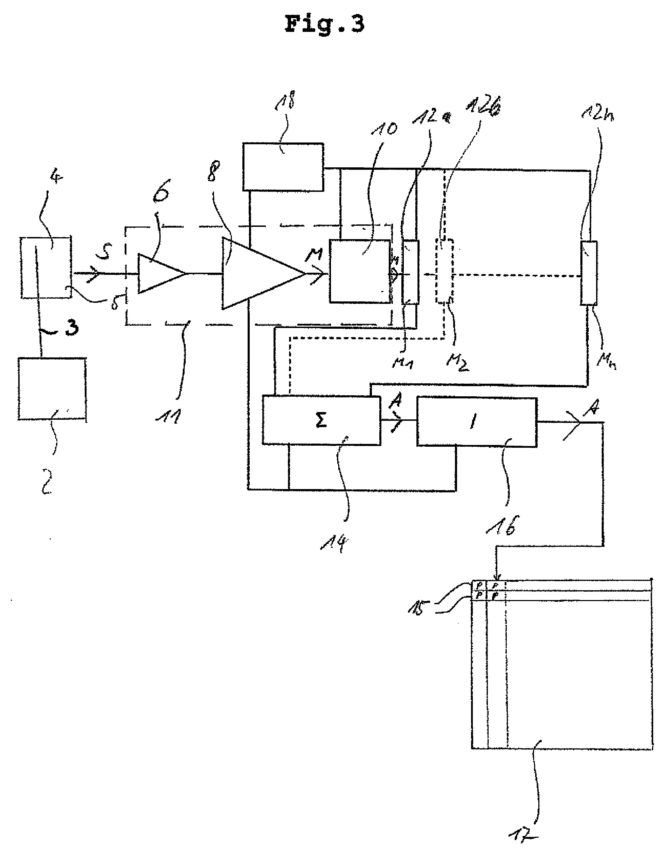

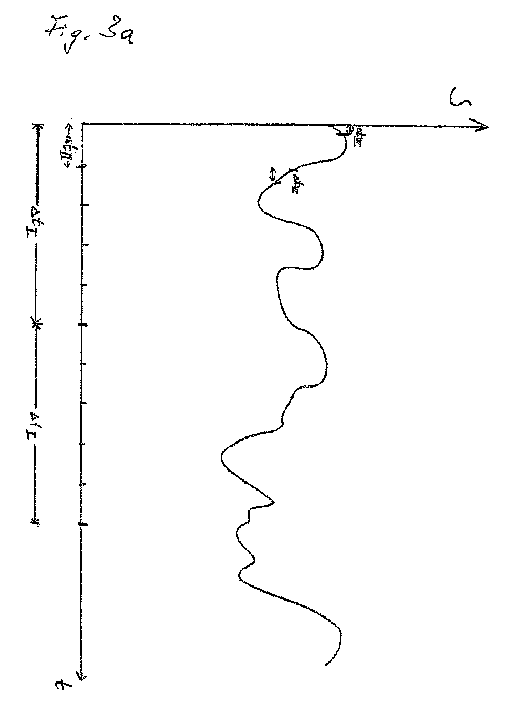

In Fig.3 ist nun eine erste Ausführungsform einer Vorrichtung zur Durchführung des erfindungsgemäßen Verfahrens dargestellt.

Mittels einer Photostimulationseinrichtung 2, in diesem Fall ein Laser, wird ein Lichtstrahl 3 erzeugt, der Zeile für Zeile über ein Speichermedium 4 bewegt wird. Ein Lichtstrahl 3 ist dabei ein schmales, eng begrenztes, kollimiertes oder fokussiertes Strahlenbündel, das sich von der Photostimulationseinrichtung 2 zum Speichermedium 4 entlang einer Linie ausbreitet und idealerweise punktförmig auf das Speichermedium 4 auftrifft. Der Lichtstrahl 3 streicht also zunächst kontinuierlich entlang einer Zeile über das Speichermedium 4, um danach in eine weitere Zeile bewegt zu werden und entlang dieser wiederum das Speichermedium 4 zu bestreichen. Insgesamt erfolgt also die Abtastung des Speichermediums 4 daher in einer schnellen Abtastgeschwindigkeit jeweils entlang einer Zeile sowie in einer langsameren Abtastgeschwindigkeit senkrecht zu den einzelnen Zeilen. Durch Photostimulation des in dem Speichermedium 4 enthaltenen Speicherleuchtstoffes 5 wird ein von den in dem Speicherleuchtstoff 5 enthaltenen Bildinformationen abhängiges Lumineszenzsignal S erzeugt. Dieses Lumineszenzsignal S wird von einem Photodetektor 6 registriert und in ein entsprechendes analoges elektrisches Signal umgewandelt.

Mit einer dem Photodetektor 6 nachgeschalteten Abtasteinrichtung 8, vorzugsweise ein Sample und Hold-Verstärker, wird das elektrische Signal und somit deren Messwerte in bestimmten Zeitabständen erfasst. Der Zeitabstand, also das zweite Zeitintervall $\Delta t_{II}$, ist dabei vorzugsweise derart bemessen, dass es kleiner ist als die Abklingzeitkonstante des Speicherleuchtstoffes. Somit wird gegenüber aus dem Stand der Technik mit einer wesentlich höheren Erfassungsrate das Lumineszenzsignal S bzw. das dieses repräsentierende elektrische Signal abgetastet.

Danach werden mittels eines der Abtasteinrichtung 8 nachgeschalteten Analog-/Digital-Wandlers 10 die durch die Abtasteinrichtung 8 erhaltenen Messwerte M in digitale Messwerte M umgewandelt. Der Photodetektor 6, die Abtasteinrichtung 8 und der A/D-Wandler 10 bilden eine Messeinrichtung 11, mittels derer das Lumineszenzsignal S erfasst wird.

Die digitalen Messwerte M werden sodann in Speicherbausteinen 12a bis 12n zwischengespeichert. Anschließend werden die n gespeicherten digitalen Messwerte $M_1$, $M_2$, ... $M_n$ mit Hilfe eines Summationsgliedes 14 zu einem Ausgangswert A addiert. Dieser Ausgangswert A dient dann als Grundlage zur Bestimmung eines Pixelwertes P eines Bildpixels 15 eines digitalen Bildes 17, wobei jedem Bildpixel 15 des Bildes 17 genau ein Ausgangswert A zugeordnet ist. Dieser Vorgang wird dann solange wiederholt, bis mittels der Photostimulationseinrichtung 2 alle gewünschten Bereiche des Speichermediums 4 überstrichen worden sind und die entsprechenden Bildinformationen ausgelesen wurden. Es werden also jeweils nacheinander eine festgelegte Anzahl n digitaler Messwerte $M_1$, $M_2$, ... $M_n$ in dem Speicher 12 zwischengespeichert und mittels des Summationsgliedes 14 zu einem Ausgangswert A addiert. Nach der Addition erfolgt dann wiederum die Speicherung von n weiteren digitalen Messwerten $M_1$, $M_2$, ... $M_n$, aus denen dann erneut ein Ausgangswert A ermittelt wird. Dieser Ausgangswert A wird somit über ein erstes Zeitintervall $\Delta t_I$ ermittelt, das der n-fachen Dauer des zweiten Zeitintervalls $\Delta t_{II}$ entspricht.

Beispielhaft ist in Fig. 3a ein Lumineszenzsignal über der Zeit dargestellt, das in den zweiten Zeitintervallen $\Delta t_{II}$ erfasst wird. Der Ausgangswert A wird über ein erstes Zeitintervall $\Delta t_I$ ermittelt, das die fünffache Länge von $\Delta t_{II}$ hat.

Somit ist in diesem Fall n = 5.

Durch die relativ zum ersten Zeitintervall $\Delta t_I$ kurze Dauer des zweiten Zeitintervalls $\Delta t_{II}$, also die Zeitabstände, in denen die Messwerte M des Lumineszenzsignals S erfasst werden, kann nun die Anzahl n der zu addierenden digitalen Messwerte $M_1, M_2, ... M_n$ so gelegt werden, dass die Dauer des ersten Zeitintervalls $\Delta t_I$ der Dauer des ersten Zeitintervalls $\Delta t_I$, wie bei einem aus dem Stand der Technik bekannten Verfahren entspricht, also deutlich oberhalb einer Mikrosekunde liegt.

Bevor der Ausgangswert A an eine nicht gezeigte Bildverarbeitungseinrichtung weitergegeben wird, wird der Ausgangswert A durch eine dem Summationsglied 14 nachgeschaltete Divisionseinrichtung 16 durch einen konstanten Faktor, vorzugsweise gleich der Anzahl n der zu einem Ausgangswert A addierten Messwerte $M_1, M_2, ... M_n$ geteilt, um den maximalen Ausgangswert A auf eine bestimmte Bit-Breite, wie z.B. 16bit, die in Computersystemen besonders einfach weiterverarbeitet und gespeichert werden kann, zu begrenzen. Durch die Addition von n digitalen Messwerten M innerhalb des ersten Zeitintervalls $\Delta t_I$ wird automatisch die Digitalisierungstiefe des Ausgangswertes A wieder erhöht, so dass ein größerer Ausgangswertebereich erfasst werden kann, als es der Digitalisierungstiefe des Analog-/Digital-Wandlers 10 alleine entspricht. Um den Ablauf des erfindungsgemäßen Verfahrens zu steuern, wird eine Steuereinheit 18, die mit den oben beschriebenen Komponenten verbunden ist, verwendet.

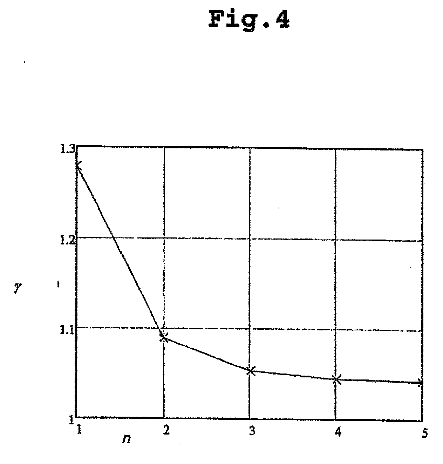

In Fig.4 ist nun die Änderung des Faktors $\gamma$ bei einem ersten Zeitintervall $\Delta t_I=2\cdot10^{-6}$s und einer Zeitkonstante von $\tau=680$ns für eine zunehmende Anzahl n der in einem ersten Zeitintervall $\Delta t_I$ addierten digitalen Messwerte M dargestellt.

Es zeigt sich, dass sich der Faktor $\gamma$ mit zunehmender Anzahl n von addierten Messwerten in einem ersten Zeitintervall $\Delta t_I$ reduziert und somit sich das Signal/Rausch-Verhältnis für den Ausgangswert A eines Röntgenquants erhöht.

Diese Erhöhung des Signal-/Rauschverhältnisses ist auch der Fall, wenn man statt des einzelnen Bildpunktsignals das gesamte, über alle folgenden Bildpunkte summierte Signal, welches von einem Röntgenquant ausgelöst wird, betrachtet.

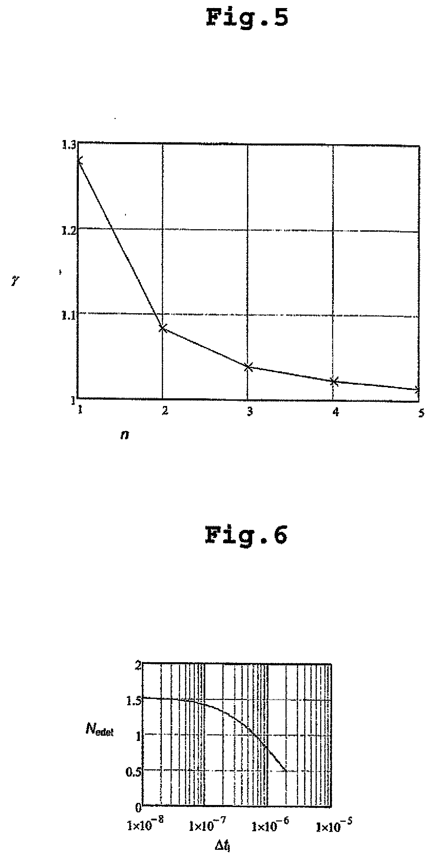

Um dies zu zeigen, ist in Fig.5 die Änderung des Faktors $\gamma$ bei einem ersten Zeitintervall $\Delta t_I=2\cdot10^{-6}$s und einer Zeitkonstante von $\tau=680$ns für eine zunehmende Anzahl n der addierten digitalen Messwerte und über alle folgenden Bildpunkte summierte Signale dargestellt, die durch Quanten in einem ersten Zeitintervall $\Delta t_I$ ausgelöst werden.

Es sei an dieser Stelle darauf hingewiesen, dass die Verbesserungen im Signal/Rausch-Verhältnis durch das erfindungsgemäße Verfahren die Auflösung des erfassten Röntgenbildes praktisch unverändert lassen und daher das Bildergebnis deutlich verbessern.

Wie bereits angeführt, wird die tatsächliche Zahl $N_X$ der absorbierten Röntgenquanten deren Lumineszenzzentren in einem ersten Zeitintervall $\Delta t_I$ vom Laserstrahl überstrichen werden durch die auf Grund begrenzter Anzahl der je Röntgenquant geschaffenen Speicherzentren, deren unvollständiger Auslesung und der unvollständigen Sammlung und Wandlung der Lichtquanten limitierte Anzahl der Photoelektronen $N_e$ auf die effektive in das gemessene Signal/Rausch-Verhältnis eingehende Quantenzahl $N_{eff}$ reduziert. Dieser Zusammenhang wird im Folgenden betrachtet, da mit zunehmender Anzahl n der addierten digitalen Messwerte in einem zweiten Zeitintervall der Wert von $N_{eff}$ beeinflusst wird.

Für einen Scanner wird die Anzahl der insgesamt bei der Registrierung im Photodetektor primär generierten Photoelektronen für ein in der Speicherfolie absorbiertes Röntgenquant einen bestimmten Wert $N_e$ annehmen. Die Abtasteinrichtung 8 wird von dieser Anzahl nur im Mittel eine Anzahl $N_{edet}$ erfassen, die davon abhängig ist, über welches dritte Zeitintervall $\Delta t_{III}$ die Abtasteinrichtung 8 das elektrische Signal erfasst und wie lang das erste Zeitintervall $\Delta t_I$ ist. Die Rate der nach der Photostimulation mit der Photostimulationseinrichtung 2 durch die photostimulierte Lumineszenz erzeugten Photoelektronen beträgt dann für ein Röntgenquant nach der Zeit t

$$\frac{dN_e}{dt}(t) = \frac{N_e}{\tau} e^{-t/\tau} \qquad (8)$$

Die mittlere Anzahl der in einem ersten Zeitintervall detektierten Photoelektronen beträgt nach dem Stand der Technik

$$N_{e\det} = \frac{1}{\Delta t_I} \int_0^{\Delta t_I} \int_t^{t+\Delta t_{III}} \frac{N_e}{\tau} e^{-t'/\tau} dt' dt = \frac{1}{\Delta t_I} \int_0^{\Delta t_I} N_e \left( e^{-t/\tau} - e^{-(t+\Delta t_{III})/\tau} \right) dt \qquad (9)$$

Hieraus ergibt sich für $N_e=6$ und das dritte Zeitintervall $\Delta t_{III}=200$ns z.B. die in Fig.6 in einem ersten Zeitintervall $\Delta t_I$ in Abhängigkeit von dessen Dauer $\Delta t_I$ dargestellte mittlere Anzahl detektierter Photoelektronen.

Die in einem Bildpunkt abgetasteten Signale von $N_X$ absorbierten Röntgenquanten ergeben insgesamt $N_{eges}=N_X \cdot N_{edet}$ nachgewiesene Photoelektronen. Deren Anzahl genügt der Poisson-Statistik und ergibt eine Rauschkomponente

$$R_e = \sqrt{N_{eges}} = \sqrt{N_X N_{e\,det}} \qquad (10)$$

Eine weitere Rauschkomponente entsteht durch die Rauschkomponente der Röntgenquantenzahl je Bildpunkt

$$R_X = \sqrt{N_X} \qquad (11),$$

die mit $N_{edet}$ multipliziert in Form von Elektronen als weitere Rauschkomponente $R_{eX}$ in dem Photoelektronensignal auftritt:

$$R_{eX} = \sqrt{N_X} \cdot N_{e\,det} \qquad (12)$$

Diese beiden Rauschkomponenten $R_e$ und $R_{eX}$ überlagern sich zu einem Gesamtrauschen

$$R_{eges} = \sqrt{N_X N_{e\,det}^2 + N_X N_{e\,det}} \qquad (13)$$

Hieraus berechnet sich das Signal-Rausch-Verhältnis der abgetasteten Photoelektronen ohne Berücksichtigung des exponentiellen Signalabfalls des Speicherleuchtstoffs zu

$$(S/R)_{eges} = \sqrt{\frac{N_X}{1 + 1/N_{e\,det}}} \qquad (14)$$

Ein Vergleich mit dem S/R-Verhältnis der Röntgenquanten

$$(S/R)_X = \sqrt{N_X} \qquad (15)$$

zeigt, dass die Anzahl der effektiv detektierbaren Röntgenquanten bei Umwandlungen in Photoelektronen durch

$$N_{eff} = \frac{N_X}{1 + 1/N_{e\,det}} \qquad (16)$$

gegeben ist.

Das S/R-Verhältnis ohne Berücksichtigung des exponentiellen Abfalls des Lumineszenzsignals S wird somit bei dem Abtastverfahren, welches dem Stand der Technik entspricht, durch den Nachweis der Photoelektronen um den Faktor

$$\alpha = \sqrt{1 + 1/N_{e\,det}} \qquad (17)$$

reduziert.

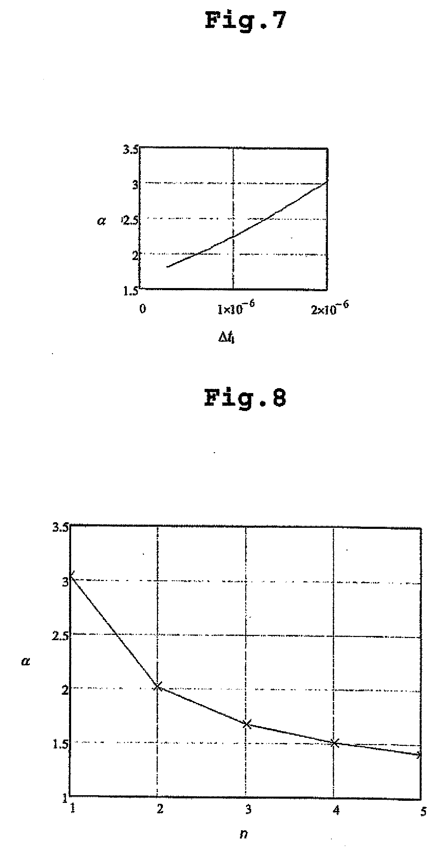

Hieraus ergibt sich für $N_e$=6 und das dritte Zeitintervall $\Delta t_{III}$=200ns in Abhängigkeit von der Dauer des ersten Zeitintervalls $\Delta t_I$ der in Fig.7 dargestellte Faktor $\alpha$.

Man erkennt, dass der Faktor $\alpha$ mit zunehmender Dauer des ersten Zeitintervalls $\Delta t_I$ deutlich zunimmt.

Damit ergibt sich für das dem Stand der Technik entsprechende Abtastverfahren gegenüber dem Idealfall insgesamt eine Abnahme des S/R-Verhältnis um den Faktor $\alpha\gamma$.

Werden dagegen mit dem erfindungsgemäßen Verfahren n digitale Werte in einem ersten Zeitintervall $\Delta t_I$

addiert, erhöht sich $N_{edet}$ gegenüber dem Stand der Technik beim erfindungsgemäßen Verfahren um den Faktor n, wodurch sich wiederum $\alpha$ reduziert und das gesamte S/R-Verhältnis erhöht. Die Abnahme von $\alpha$ ist in Fig.8 bei einem ersten Zeitintervall $\Delta t_I = 2 \cdot 10^{-6}$s und einer Zeitkonstante von $\tau = 680$ns für zunehmende Anzahl n der addierten digitalen Messwerte M dargestellt.

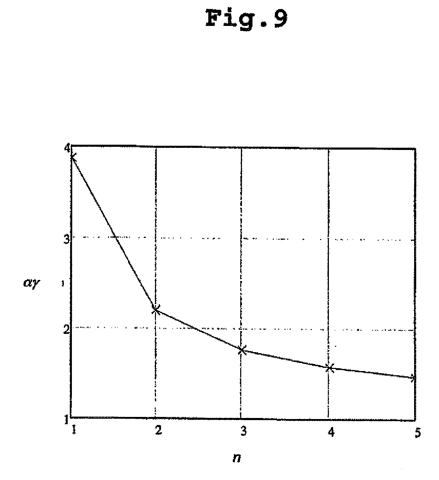

Insgesamt ergibt sich für das erfindungsgemäße Verfahren unter gleichen Bedingungen mit zunehmender Anzahl n der in einem ersten Zeitintervall $\Delta t_I$ addierten digitalen Messwerte M die in Fig.9 dargestellte Abnahme des Faktors $\alpha\gamma$.

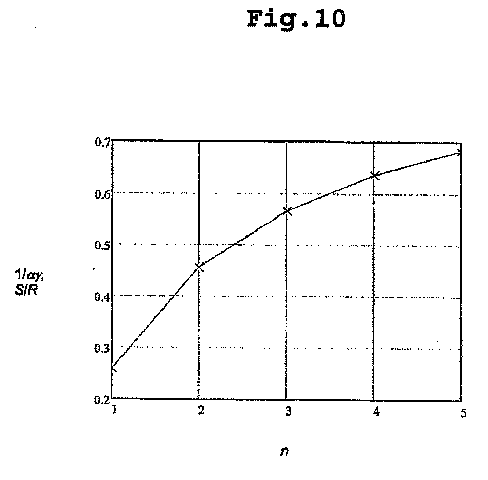

In Fig.10 ist die Zunahme des Signal/Rausch-Verhältnisses mit dem erfindungsgemäßen Verfahren unter den ansonsten gleichen Bedingungen mit zunehmender Anzahl n der addierten Werte in einem ersten Zeitintervall $\Delta t_I$ dargestellt.

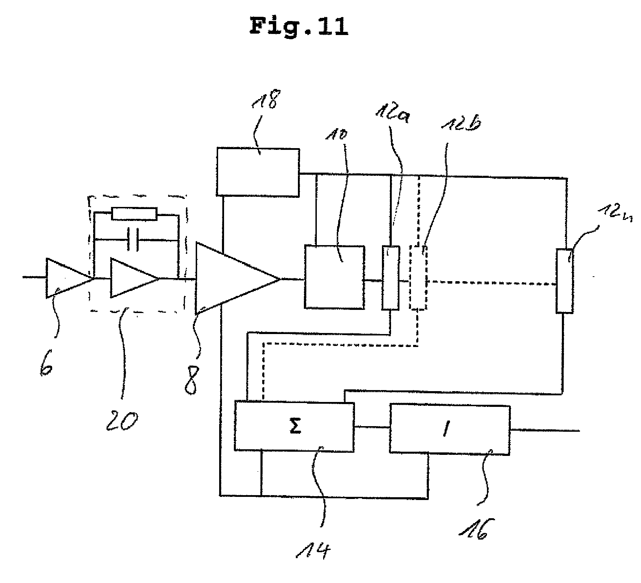

Da die Breite des dritten Zeitintervalls $\Delta t_{III}$ i.a. durch die Abtasteinrichtung 8 fest vorgegeben ist, sieht eine in Fig. 11 dargestellte weitere Ausführungsform der Erfindung vor, dass das durch die Abtasteinrichtung 8 erfasste analoge elektrische Signal durch Vorschalten eines analogen Filters 20 zuvor über einen noch längeren zeitlichen Bereich gemittelt wird, um noch mehr Photoelektronen erfassen zu können. Dies kann erfindungsgemäß z.B. mit einem Tiefpassfilter geschehen, dessen Reziprokwert der Grenzfrequenz, welcher der Zeitkonstante $\tau_T$ entspricht, noch länger als $\Delta t_{III}$ und in der Größenordnung von $\Delta t_{I/n}$ ist. Eine spezielle, einfache Realisierungsform kann ein Tiefpassfilter erster Ordnung sein.

Ein derartiges Filter 20 hat natürlich auch Auswirkung auf das Abklingen des Messsignals eines Quants. Während das Messsignal ohne das Filter 20 aus dem exponentiellen Abfall mit der Zeitkonstante $\tau$ besteht, besteht mit dem Filter 20 das Messsignal aus diesem exponentiellen Abfall gefaltet mit der Pulsantwort des Tiefpassfilters, die ebenfalls eine exponentiell abfallende Funktion mit der Zeitkonstante $\tau_T$ ist.

Gemäß einer bevorzugten Ausführung der Erfindung ist die Zeitkonstante des Tiefpassfilters $\tau_T$ allerdings deutlich geringer als die Abklingzeitkonstante $\tau$ des Speicherleuchtstoffs. Die Faltung dieser beiden exponentiell abfallenden Funktionen hat bis auf einen konstanten Vorfaktor einen zeitlichen Verlauf entsprechend der Form

$$S_F = e^{-t/\tau}\left(1 - e^{-t/\tau_T + t/\tau}\right) \approx e^{-t/\tau}\left(1 - e^{-t/\tau_T}\right) \approx e^{-t/\tau} \qquad (18)$$

und verändert damit die Auflösung des Systems nur unwesentlich, erhöht aber wie oben beschrieben das Signal/Rausch-Verhältnis. Denn die im Vergleich zur Abklingzeitkonstante $\tau$ deutlich kürzere Zeitdauer des dritten Zeitintervalls $\Delta t_{III}$ wird durch Faltung mit der Pulsantwort des Tiefpassfilters vergrößert, so dass entsprechend mehr Photoelektronen erfasst werden. Bei im Vergleich zur Zeitkonstante des Tiefpassfilters $\tau_T$ sehr kurzen dritten Zeitintervallen $\Delta t_{III}$ wird das dritte Zeitintervall $\Delta t_{III}$ effektiv auf die Zeitkonstante des Tiefpassfilters $\tau_T$ vergrößert.

Grundsätzlich können aber auch andere analoge Filter verwendet werden, die über eine Zeitdauer $\tau_T$ mitteln, die größer als das dritte Zeitintervall $\Delta t_{III}$ sind. Dazu gehören z.B. Tiefpassfilter noch höherer Ordnung. Filter 20 mit gaußförmiger Pulsantwort haben hier den Vorteil eines besonders schnellen Anstiegs und Abfalls und damit einer besonders geringen Beeinflussung des Abklingens des Messsignals.

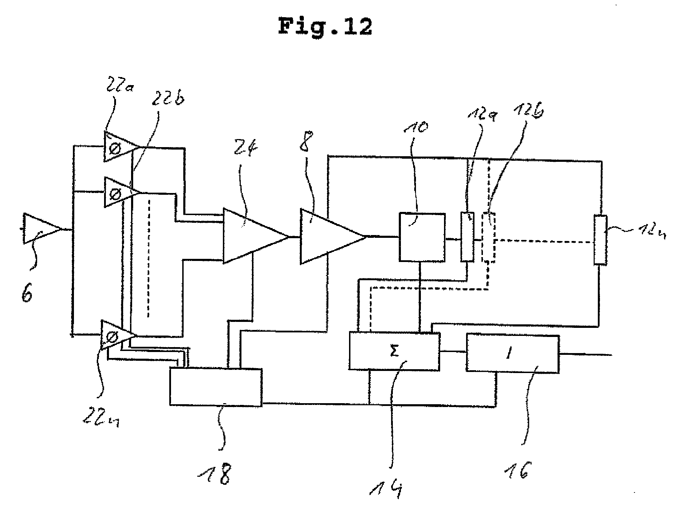

Eine in Fig. 12 dargestellte weitere Ausführungsform sieht vor, von dem analogen elektrischen Signal vor dem Erfassen mit der Abtasteinrichtung 8 einen Mittelwert zu bilden. Allerdings haben herkömmliche analoge Mittelwertbildner 22, die auf Integrationsschaltungen basieren, den Nachteil einer relativ geringen Bandbreite und relativ langen Rücksetzzeit, so dass diese Realisierungsform gegenüber der zuvor beschriebenen mit einem Tiefpassfilter unterlegen ist.

Der Nachteil der langen Rücksetzzeit analoger Mittelwertschaltungen, die das zweite Zeitintervall $\Delta t_{II}$, also den Zeitabstand $\Delta t_I/n$ zu kurzen Zeiten hin begrenzt, kann jedoch ausgeglichen werden, indem mehrere Mittelwertbildner 22a bis 22n parallel arbeiten, die mit einem Zeitversatz $\Delta t_I/n$ nacheinander gestartet, anschließend jeweils nach der Zeit $\Delta t_I/n$ wieder gestoppt werden, um den jeweiligen Mittelwert zu bilden. Gemäß Fig.12 ist dazu der Abtasteinrichtung 8 ein Multiplexer 24 mit n gemultiplexten Eingängen vorgeschaltet, die mit den Ausgängen der n Mittelwertbildner 22a bis 22n verbunden sind. Sobald der erste Mittelwert des ersten Mittelwertbildners 22a gebildet wurde, wird dieses vom Multiplexer 24 auf den Eingang der Abtasteinrichtung 8 geschaltet, die Abtasteinrichtung 8 ausgelöst und der analoge Messwert M digitalisiert. Gleichzeitig wird der zweite Mittelwertbildner 22b gestartet. Anschließend wird der erste Mittelwertbildner 22a zurückgesetzt. So werden nacheinander die Messwerte M der $n$ Mittelwertbildner, die jeweils den Mittelwert über n aneinander anschließende zweite Zeitintervalle $\Delta t_{II} = \Delta t_I/n$ bilden, erfasst. Das Rücksetzen des ersten Mittelwertbildners 22a wird beendet, wenn die Abtasteinrichtung 8 das Signal des n-ten Mittelwertbildners erfasst hat. Gleichzeitig wird der erste Mittelwertbildner 22a wieder gestartet.

Durch das exponentielle Abklingen und die Pulsantworten der Filter 20 wird die Auflösung des gemessenen Röntgenbilds in der schnell erfassten Zeilenrichtung umso mehr gegenüber der Erfassung senkrecht zur Zeilenrichtung, die wesentlich langsamer erfolgt, herabgesetzt je kürzer die Dauer des ersten Zeitintervalls $\Delta t_I$ ist. Weiterhin wird im Frequenzraum die maximale Auflösung in Linienpaaren pro mm durch die Nyquist-Frequenz

$$f_N = \frac{1}{2\Delta t_I} \tag{19}$$

begrenzt. Weiterhin gilt bei äquidistanten ersten Zeitintervallen $\Delta t_I$ und einem Signalnachweis über die gesamte Pixelgröße für die Modulations-Transfer-Funktion (MTF) die Beziehung

$$MTF_{Abtastung}\left(f\right) = \sin\!\left(\pi \cdot f \cdot \Delta t_I\right)\big/\left(\pi \cdot f \cdot \Delta t_I\right) \tag{20}$$

Entsprechend werden bei der Nyquist-Frequenz $f_N$ Frequenzamplituden um den Faktor $2/\pi=0.636$ ... abgeschwächt. Durch das exponentielle Abklingen des photostimulierten Lumineszenzsignals erfolgt in der schnellen Erfassungsrichtung eine weitere Abschwächung der hohen Ortsfrequenzen, die umso ausgeprägter ist, je kürzer das erste Zeitintervall $\Delta t_I$ ist. Um nun eine ähnliche Abschwächung der hohen Ortsfrequenzen in der schnellen Erfassungsrichtung (Zeilenrichtung), wie auch in der langsamen Erfassungsrichtung (senkrecht zur Zeile) zu erreichen, wird gemäß einer weiteren bevorzugten Ausführung der Erfindung das erste Zeitintervall in der schnellen Zeilenrichtung im Ortsraum $\Delta x = V_{scan} \cdot \Delta t_I$ verkleinert ($v_{scan}$= Lasergeschwindigkeit in Zeilenrichtung) und entsprechend das erste Zeitintervall $\Delta t_I$ verkürzt. Bei einem Wert $\Delta x$, der beispielsweise der Hälfte der Größe eines Bildpunktes $\Delta y$ senkrecht zur schnellen Abtastrichtung entspricht, kann so die Abschwächung bei der ursprünglichen Nyquist-Frequenz in x-Richtung um den Faktor $(\sin(\pi/4)/(\pi/4))/0.636=0.900/0.636=1.41=\sqrt{2}$ reduziert und damit die Auflösung um ca. 41% verbessert.
Im Allgemeinen wird durch häufigere Abtastung in der Zeilenrichtung MTF$_{Abtastung}$ vergrößert und die Abschwächung bei der ursprünglichen Nyquist-Frequenz reduziert und infolgedessen die Auflösung in der schnellen Abtastrichtung erhöht. Auf diese Art und Weise kann eine in schneller und langsamer Erfassungsrichtung annähernd gleiche Auflösung erreicht werden, wie sie in der Praxis oftmals gewünscht wird.

## Patentansprüche

1. Verfahren zum Auslesen von in einem Speicherleuchtstoff (5) eines Speichermediums (4) gespeicherten Bildinformationen mit folgenden Schritten:

   a) ein Lichtstrahl (3) wird über das Speichermedium (4) bewegt, um durch Photostimulation des Speicherleuchtstoffes (5) ein Lumineszenzsignal (S) zu erzeugen,
   b) aus dem Lumineszenzsignal (S) wird in ersten Zeitintervallen ($\Delta t_I$) jeweils ein Ausgangswert (A) ermittelt, aus dem jeweils ein Pixelwert (P) eines Bildpixels (15) eines digitalen Bildes (17) bestimmt wird,

   **dadurch gekennzeichnet**,

   c) dass der Ausgangswert (A) durch blockweise Addition einer festgelegten Anzahl von aufeinander folgenden Messwerten (M) des Lumineszenzsignals (S) ermittelt wird, die in innerhalb des ersten Zeitintervalls ($\Delta t_I$) liegenden zweiten Zeitintervallen ($\Delta t_{II}$) erfasst werden, wobei eine Anzahl (n) der Messwerte multipliziert mit der Dauer des zweiten Zeitintervalls ($\Delta t_{II}$) der Dauer des ersten Zeitintervalls ($\Delta t_I$) entspricht und das zweite Zeitintervall ($\Delta t_{II}$) kleiner ist als die dreifache Abklingzeitkonstante.

2. Verfahren nach Anspruch 1, bei dem das zweite Zeitintervall ($\Delta t_{II}$) kleiner ist als die Abklingzeitkonstante des Speicherleuchtstoffes (5).

3. Verfahren nach Anspruch 1 oder 2, bei dem in Schritt c) Messwerte des Lumineszenzsignals (S) erfasst werden, indem:

   - das Lumineszenzsignal (S) mittels eines Photodetektors (6) registriert und in ein analoges elektrisches Signal umgewandelt wird,
   - das elektrische Signal in zweiten Zeitintervallen ($\Delta t_{II}$) von einer Abtasteinrichtung (8) erfasst wird,
   - die dadurch erhaltenen analogen Messwerte (M) mittels eines A/D-Wandlers in digitale Messwerte (M) umgewandelt werden, aus denen der Ausgangswert (A) ermittelt wird.

4. Verfahren nach einem der vorhergehenden Ansprüche, bei dem der Ausgangswert (A) zu dessen Begrenzung auf einen maximalen Wert durch einen Faktor dividiert wird.

**5.** Verfahren nach Anspruch 3 oder 4, bei dem das elektrische Signal vor dem Erfassen gefiltert wird.

**6.** Verfahren nach Anspruch 5, bei dem das elektrische Signal vor dem Erfassen durch ein Tiefpassfilter (20), insbesondere durch ein Tiefpassfilter (20) erster Ordnung oder ein Tiefpassfilter (20) mit einer gaußförmigen Impulsantwort gefiltert wird.

**7.** Verfahren nach Anspruch 5 oder 6, bei dem das elektrische Signal vor dem Abtasten durch ein Filter (20) gefiltert wird, dessen Pulsantwort kürzer ist, als die Abklingzeitkonstante des Speicherleuchtstoffes (5).

**8.** Verfahren nach einem der vorhergehenden Ansprüche, bei dem das elektrische Signal vor dem Erfassen gemittelt wird.

**9.** Verfahren nach einem der vorhergehenden Ansprüche, bei dem der Lichtstrahl (3) über das Speichermedium (4) in einer Zeilenrichtung schneller über das Speichermedium bewegt wird als in einer dazu senkrecht stehenden Richtung, wobei ein Erfassen der Messwerte im Ortsraum in der Zeilenrichtung in einem geringeren Abstand durchgeführt wird, als senkrecht zur Zeilenrichtung.

**10.** Vorrichtung zum Auslesen von in einem Speicherleuchtstoff (5) eines Speichermediums (4) gespeicherten Bildinformationen mit gemäß einem Verfahren nach einem der Ansprüche 1 bis 9, umfassend:

a) ein Photostimulationseinrichtung (2) zum Photostimulieren des Speicherleuchtstoffes (5) und Erzeugen eines Lumineszenzsignals (S),
b) ein Messeinrichtung (11) zum Erfassen des Lumineszenzsignals (S),
c) ein Summationsglied (14), mit dessen Hilfe durch Addition mehrerer Messwerte (M) jeweils ein Ausgangswert (A) ermittelt wird.

**11.** Vorrichtung nach Anspruch 10, bei der die Messeinrichtung (11) umfasst:

a) einen Photodetektor (6), mit dessen Hilfe das Lumineszenzsignal (S) registriert und in ein analoges elektrisches Signal umgewandelt wird,
b) eine dem Photodetektor (6) nachgeschaltete Abtasteinrichtung (8) zum Erfassen des elektrischen Signals,
c) einen der Abtasteinrichtung (8) nachgeschalteten A/D-Wandler (10) zum Umwandeln der durch das Erfassen erhaltenen analogen Messwerte (M) in digitale Messwerte (M),

**12.** Vorrichtung nach Anspruch 10 oder 11, bei der dem Summationsglied (14) eine Divisionseinrichtung (16) zur Teilung des Ausgangswertes (A) durch einen Faktor nachgeschaltet ist.

**13.** Vorrichtung Anspruch 11 oder 12, bei der der Abtasteinrichtung (8) ein Filter (20) vorgeschaltet ist.

**14.** Vorrichtung nach Anspruch 13, bei der das Filter (20) ein Tiefpassfilter (20), insbesondere ein Tiefpassfilter (20) erster Ordnung oder ein Tiefpassfilter (20) mit einer gaußförmigen Impulsantwort ist.

**15.** Vorrichtung nach Anspruch 13 oder 14, bei dem das Filter (20) eine Pulsantwort aufweist, die kürzer ist als die Abklingzeitkonstante des Speicherleuchtstoffes (5).

**16.** Vorrichtung nach einem der Ansprüche 9 bis 14, bei der dem Photodetektor (6) Mittelwertbildner (22a-22n) nachgeschaltet sind, die über einem Multiplexer (24) mit der Abtasteinrichtung (8) verbunden sind.

**Claims**

**1.** Method for reading image information saved in a storage phosphor (5) of a storage medium (4), having the following steps:

a) a beam of light (3) is passed over the storage medium (4) in order to produce a luminescence signal (S) by photo stimulation of the storage phosphor (5),

b) at the same time, a starting value (A) is recorded from the luminescence signal (S) in initial time intervals ($\Delta t_I$), from which a pixel value (P) of an image pixel (15) of a digital image (17) is determined respectively, **characterised in that**
c) the starting value (A) is ascertained by block-by-block addition of a fixed number of successive measurements (M) of the luminescence signal (S), which are ascertained in the second time interval ($\Delta t_{II}$), which lies within the first time interval ($\Delta t_I$), wherein a number (n) of measurements multiplied by the length of the second time interval ($\Delta t_{II}$) corresponds to the length of the first time interval ($\Delta t_I$), and the second time interval ($\Delta t_{II}$) is shorter than the triple decreasing time constant.

2. Method according to claim 1, in which the second time interval ($\Delta t_{II}$) is shorter than the decreasing time constant of the storage phosphor (5).

3. Method according to claim 1 or 2, in which in step c) measurements of the luminescence signal (S) are recorded, by:

- the luminescence signal (S) being registered by means of a photo detector (6) and converted into an analogue, electric signal,
- the electric signal being recorded in second time intervals ($\Delta t_{II}$) by a scanner (8),
- the analogue measurements (M) obtained as a result of this being converted into digital measurements (M) by means of an A/D converter, from which the starting value (A) is ascertained.

4. Method according to one of the preceding claims, in which the starting value (A) is divided by a factor in order to limit it to a maximum value.

5. Method according to claim 3 or 4, in which the electric signal is filtered before recording.

6. Method according to claim 5, in which the electric signal is filtered before recording through a low-pass filter (20), in particular through a first-order low-pass filter (20) or a low-pass filter (20) having a Gaussian impulse response.

7. Method according to claim 5 or 6, in which the electric signal is filtered before scanning through a filter (20), whose pulse response is shorter than the decreasing time constant of the storage phosphor (5).

8. Method according to one of the preceding claims, in which the electric signal is averaged before recording.

9. Method according to one of the preceding claims, in which the beam of light (3) is moved over the storage medium (4) in a line direction more quickly over the storage medium than in a direction perpendicular to it, wherein recording the measurements in the position space in the line direction is carried out at a smaller distance than perpendicular to the line direction.

10. Device for reading image information saved in a storage phosphor (5) of a storage medium (4) using a method according to one of claims 1 to 9, comprising

a) a photo stimulation device (2) for photo stimulating the storage phosphor (5) and producing a luminescence signal (S),
b) a measuring device (11) for recording the luminescence signal (S),
c) a summation element (14) whereby a respective starting value (A) is ascertained through the addition of numerous measurements (M).

11. Device according to claim 10, in which the measuring device (11) comprises:

a) a photo detector (6), whereby the luminescence signal (S) is registered and transformed into an analogue electric signal,
b) a scanner (8) downstream of the photo detector (6) for recording the electric signal,
c) an A/D converter (10) downstream of the scanner (8) for converting the analogue measurements (M) obtained by the recording into digital measurements (M),

12. Device according to claim 10 or 11, in which a division device (16) is positioned downstream of the summation element (14) for dividing the starting value (A) by a factor.

**13.** Device according to claim 11 or 12, in which a filter (20) is positioned upstream of the scanner (8).

**14.** Device according to claim 13, in which the filter is a low pass filter (20), in particular a first-order low pass filter (20) or a low pass filter (20) having a Gaussian impulse response.

**15.** Device according to claim 13 or 14, in which the filter (20) has a pulse response which is shorter than the decreasing time constant of the storage phosphor (5).

**16.** Device according to one of claims 9 to 14, in which averagers (22a-22n) are positioned downstream of the photo detector (6), the averagers being connected to the scanner (8) via a multiplexer (34).

**Revendications**

**1.** Procédé de lecture d'informations d'images mémorisées dans une matière fluorescente (5) de mémoire d'un support (4) de mémoire, comprenant les stades suivants :

a) on déplace un faisceau (3) lumineux sur le support (4) de mémoire pour produire un signal (S) de luminescence par photostimulation de la matière (5) fluorescente de mémoire,

b) à partir du signal (S) de luminescence, on détermine, dans un premier intervalle ($\Delta t_{\mathrm{I}}$) de temps, une valeur (A) initiale, à partir de laquelle on détermine une valeur (P) d'un pixel d'une image (17) numérique,

caractérisé

c) en ce qu'on détermine la valeur (A) initiale par addition bloc par bloc d'un nombre fixé de valeurs (M) de mesure se succédant du signal (S) de luminescence, qui sont relevées dans des deuxièmes intervalles ($\Delta t_{\mathrm{II}}$) de temps se trouvant dans le premier intervalle ($\Delta t_{\mathrm{II}}$) de temps, un nombre (n) des valeurs de mesure multiplié par la durée du deuxième intervalle ($\Delta t_{\mathrm{II}}$) de temps correspondant à la durée du premier intervalle ($\Delta t_{\mathrm{II}}$) de temps et le deuxième intervalle ($\Delta t_{\mathrm{II}}$) de temps étant plus petit que le triple de la constante de temps de déclin.

**2.** Procédé suivant la revendication 1, dans lequel le deuxième intervalle ($\Delta t_{\mathrm{II}}$) de temps est plus petit que la constante de temps de déclin de la matière (5) fluorescente de mémoire.

**3.** Procédé suivant la revendication 1 ou 2, dans lequel, dans le stade c), on relève des valeurs de mesure du signal (S) de luminescence en :

- enregistrant le signal (S) de luminescence au moyen d'un photodétecteur (6) et en le transformant en un signal électrique analogique,
- en relevant le signal électrique dans des deuxièmes intervalles ($\Delta t_{\mathrm{II}}$) de temps par un dispositif (8) d'échantillonnage,
- en transformant les valeurs (M) de mesure analogiques ainsi obtenues au moyen d'un convertisseur analogique/numérique en des valeurs (M) de mesure numériques, à partir desquelles on détermine la valeur (A) initiale.

**4.** Procédé suivant l'une des revendications précédentes, dans lequel on divise, par un facteur, la valeur (A) initiale pour sa limitation à une valeur maximum.

**5.** Procédé suivant la revendication 3 ou 4, dans lequel, avant le relevé, on filtre le signal électrique.

**6.** Procédé suivant la revendication 5, dans lequel, avant le relevé, on filtre le signal électrique par un filtre (20) passe-bas, notamment par un filtre (20) passe-bas du premier ordre ou par un filtre (20) passe-bas ayant une réponse impulsionnelle gaussienne.

**7.** Procédé suivant la revendication 5 ou 6, dans lequel, avant l'échantillonnage, on filtre le signal électrique par un filtre (20), dont la réponse impulsionnelle est plus courte que la constante de temps de déclin de la matière (5) fluorescente de mémoire.

**8.** Procédé suivant l'une des revendications précédentes, dans lequel on fait la moyenne du signal électrique avant le relevé.

EP 2 448 237 B1

**9.** Procédé suivant l'une des revendications précédentes, dans lequel on déplace le faisceau (3) lumineux sur le support (4) de mémoire dans une direction de ligne plus vite que dans une direction qui y est perpendiculaire, un relevé des valeurs de mesure étant effectué dans l'espace dans la direction des lignes à une distance plus petite que perpendiculairement à la direction des lignes.

**10.** Dispositif de lecteur d'informations d'images mémorisées dans une matière fluorescente (5) de mémoire d'un support (4) de mémoire par un procédé suivant l'une des revendications 1 à 9, comprenant :

a) un dispositif (2) de photostimulation pour photostimuler la matière fluorescente (5) de mémoire et produire un signal (S) de luminescence,
b) un dispositif (11) de mesure pour relever le signal (S) de luminescence,
c) un élément (14) de sommation, à l'aide duquel on détermine une valeur (A) initiale par addition de plusieurs valeurs (M) de mesure.

**11.** Dispositif suivant la revendication 10, dans lequel le dispositif (11) de mesure comprend :

a) un photodétecteur (6), à l'aide duquel on enregistre le signal (S) de luminescence et on le transforme en un signal électrique analogique,
b) un dispositif (8) d'échantillonnage en aval du photodétecteur (6) pour relever le signal électrique,
c) un convertisseur (10) analogique/numérique en aval du dispositif (8) d'échantillonnage pour transformer les valeurs (M) de mesure analogiques obtenues par le relevé en des valeurs (M) de mesure numériques.

**12.** Dispositif suivant la revendication 10 ou 11, dans lequel un dispositif (16) de division pour diviser la valeur (A) initiale par un facteur est monté en aval du dispositif (14) de sommation.

**13.** Dispositif suivant la revendication 11 ou 12, dans lequel un filtre (20) est monté en amont du dispositif (8) d'échantillonnage.

**14.** Dispositif suivant la revendication 13, dans lequel le filtre (20) est un filtre (20) passe-bas, notamment un filtre (20) passe-bas du premier ordre ou un filtre (20) passe-bas ayant une réponse impulsionnelle gaussienne.

**15.** Dispositif suivant la revendication 13 ou 14, dans lequel le filtre (20) a une réponse impulsionnelle, qui est plus courte que la constante de temps de déclin de la matière (5) fluorescente de mémoire.

**16.** Dispositif suivant l'une des revendications 9 à 14, dans lequel, en aval du photodétecteur (6), sont montés des formeurs (22a-22n) de valeur moyenne, qui sont reliés au dispositif (8) d'échantillonnage par un multiplexeur (24).

# Fig.1

# Fig.2

# Fig.3

Fig. 3a

# Fig.4

## Fig.5

## Fig.6

# Fig.7

# Fig.8

# Fig.9

# Fig.10

# Fig.11

# Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4692813 A
- US 6580525 B
- EP 077677 B1
- EP 0599128 A2
- EP 182099 A1

**In der Beschreibung aufgeführte Nicht-Patentliteratur**

- **H. VON SEGGERN.** *Brazilian Journal of Physics,* Juni 1999, vol. 29 (2), 254
- **J. MIYAHARA et al.** *Nuclear Instruments and Methods in Physics Research,* 1986, vol. A246, 572-578